# EUROPEAN PATENT APPLICATION

(11) **EP 3 792 765 A1**
(43) Date of publication of application: **17.03.2021**
(21) Application number: 19465555.1
(22) Date of filing: 10.09.2019
(51) Int. Cl.: G06F 11/07, B60W 50/00

(54) **METHOD FOR HANDLING TRANSIENT SAFETY RELEVANT ERRORS IN THE VEHICLE AND ELECTRONIC CONTROL SYSTEM OF THE VEHICLE**

(71) Applicant: Vitesco Technologies GmbH, 30165 Hannover (DE)
(72) Inventor: Bulgarasu, Constantin-Gabriel, 700687 Iasi (RO)

(57) **Abstract**

Method for handling safety-relevant errors in a vehicle, comprising
- diagnosing the functionality of at least one safety-relevant functional component by a non-safety software;
- diagnosing the functionality of the safety-relevant functional component by a safety software;
- setting the functional component to safe state only if and only as long as the safety software detects an error of the safety-relevant functional component. Thus, it is possible to heal transient safety errors and increase the availability of the component.

## Description

The present invention relates to a method for handling transient safety-relevant errors in a vehicle. Furthermore, it relates to an electronic control system of a vehicle.

In modern vehicles, functional safety plays an important role. Safety goals in the development of automotive components are related to potential risks due to errors in software or hardware parts of the respective component. Safety-relevant functional components may in particular include a drive system and a braking system or their subsystems.

ISO 26262 regulates the implementation of concepts of functional safety during development and production of safety-relevant functional components of the vehicle. If a safety relevant error of a component is detected, the component is moved into a permanent safe state. A safe state is defined as a state in which the component poses a minimum risk for humans. Depending on the component, it might be a state in which energy transfer to and from the component is prevented.

However, moving the component to a safe state limits the availability of this component. Usually, the component is only moved out of the safe state when the vehicle is started again. It is an object of the present invention to provide a method for handling transient safety-relevant errors in a vehicle or a vehicle subsystem, which ensures functional safety of the vehicle in accordance with ISO 26262 and increases the availability of functional components of the vehicle. Furthermore, an electronic control system of the vehicle implementing such a method is provided.

This object is achieved by means of the method according to claim 1 and the electronic control system according to claim 5. Advantageous embodiments and developments are objects of the dependent claims.

According to a first aspect of the invention, a method for handling transient safety-relevant errors in a vehicle is provided, the method comprising diagnosing the functionality of at least one safety relevant functional component by a non-safety software. The non-safety software, which is often denoted as quality management (QM) software, is defined as software which diagnoses the functionality of the safety-relevant functional component as a whole e.g. sensors, actuators, and their respective application software (control loop).

The method further comprises diagnosing the functionality of the safety relevant functional component by a safety software. The safety software is an additional, typically more expensive software layer and is a software that is able to diagnose all the functionalities of every single subsystem of the functional component. Hence, the safety software is able to diagnose the functionality of e.g. every sensor and actuator and the respective application software independently. Typically, the safety software monitors redundant sensors and will therefore be able to yield a reliable diagnosis.

The method further comprises setting the functional component to safe state only if and only as long as the safety software detects an error of the safety relevant functional component.

The method has the advantage, that it provides a healing strategy for transient errors and makes it possible for the functional component which has been moved into safe state to go functional again, if the error does not persist. This increases the availability of the functional component.

It has been found that moving the safety-relevant component to a permanent safe state is in most cases too strict and decreases availability of the component unnecessarily. Decreasing availability may be a safety risk. The method according to the present invention increases the availability of the component in case of a transient error as well as in case of an erroneously detected error. Thus, the method provides a healing strategy to handle transient safety-relevant errors as well as processing problems of the QM software.

According to an embodiment of the invention, setting the functional component to safe state includes preventing energy to be transferred to and from the functional component.

For many functional components, stopping energy transfer to and from the functional component is the most efficient way to set the component to safe state. However, safe state depends on the kind of component involved and may be different for some functional components.

According to an aspect of the invention, a restart of the non-safety software is triggered by the safety software, if the safety software is unable to confirm an error of the safety-relevant functional component detected by the non-safety software.

This has the advantage, that the non-safety software is diagnosed by the safety software. If, for example, the non-safety software detects in error with component A, the safety software will diagnose all subsystems of component A. If the safety software, which is able to diagnose every subsystem of component A separately and independently, is unable to confirm the presence of an error, it is concluded that there is no safety-relevant error with the component A, but that there is a processing error on the non-safety software side, which may be solved by restarting the non-safety software. Hence, it is not necessary in this case to move the component A into safe state, and to do so would only decrease the availability of the component unnecessarily.

According to an embodiment of the invention, diagnosing the functionality of the at least one safety-relevant functional component includes repeatedly performing diagnostic tests at time intervals by the non-safety software and the safety software.

As the non-safety software diagnoses the at least one functional component as a whole, it does not require nearly as much computing power as the safety software. Hence, performing diagnostic tests with the non-safety software at time intervals is an efficient method of diagnosing the functionality of the at least one safety-relevant functional component and provides a redundancy for the safety software.

According to an aspect of the invention, an electronic control system of a vehicle comprising at least one control unit adapted to perform the described method is provided.

Further advantages, advantageous embodiments and developments of the invention will become apparent from the exemplary embodiments which are described below in association with the schematic figures.
- Figure 1: shows a vehicle equipped with an electronic control system according to the present invention;
- Figure 2: shows a flow chart illustrating a method according to the present invention;
- Figure 3: shows a comparison of the reactions of the electronic control system according to the state of the art and according to an embodiment of the invention;
- Figure 4: shows an example of an error detected by QM and safety-software and
- Figure 5: shows an example of an error detected by QM which could not be confirmed by safety-software.

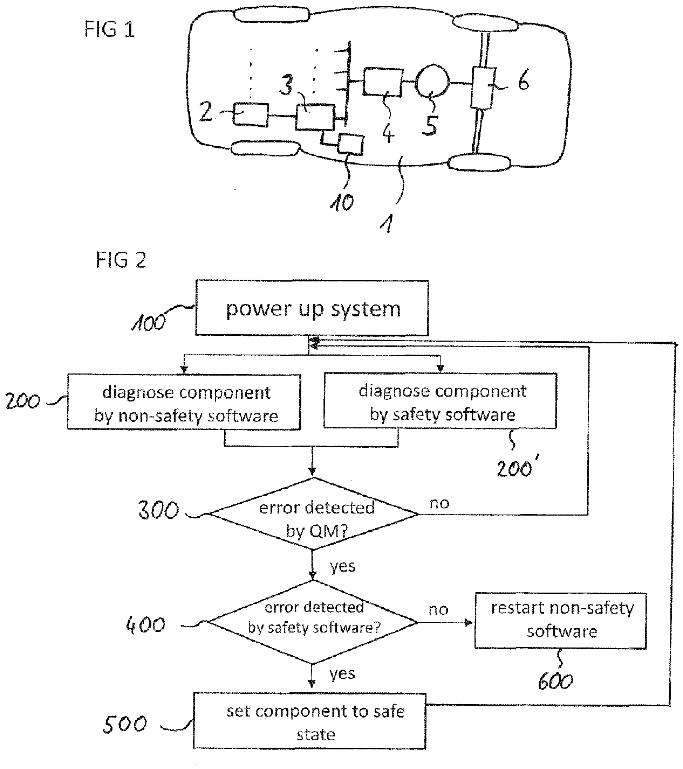

Figure 1 shows a vehicle 1, which is in this embodiment a passenger car. The vehicle 1 comprises a number of functional components or subsystems. In figure 1, a battery 2 of the vehicle 1 is shown with a DC/DC 3, a DC/AC 4, an electric motor 5 and a transmission 6 as examples for functional components. In the same way, the vehicle 1 may comprise a number of other components, e.g. a window lifter, a sun roof etc.

Figure 1 shows an electronic control system 10 of the battery DC/DC 3. Such a control system may be assigned to other functional components of the vehicle 1, too.

Each functional component may comprise a number of subsystems, in particular hardware components such as sensors and actuators and software components.

The electronic control system 10 comprises means to diagnose the functionalities of the respective functional component, here the battery DC/DC 3.

Some functional components are safety-relevant functional components of the vehicle 1, which means that they are classified as safety-relevant according to ISO 26262.

A method for handling safety-relevant errors in the vehicle 1 by the electronic control system 10 according to an embodiment of the invention is described with reference to figures 2, 3, 4 and 5.

The method according to figure 2 comprises the step 100 of powering up the system, e.g. by starting the engine of the vehicle, the step 200 of diagnosing safety-relevant components of the vehicle by a non-safety software, also denoted as QM software, and the step 200' of diagnosing safety-relevant components of the vehicle by a safety software.

If in step 300 an error is detected in the safety-relevant component by the QM software and the error is also detected by the safety software in step 400, the component is set to safe state in step 500.

If, however, the safety software does not confirm the presence of an error, the non-safety software is restarted in step 600 and the diagnosing of the functionality of the component by the non-safety software and the safety software is continued.

According to the embodiment shown in figure 2, if the component has been set to safe state, it continues to be diagnosed by the safety and non-safety software. If the error is not detected any more, the component is moved out of safe state.

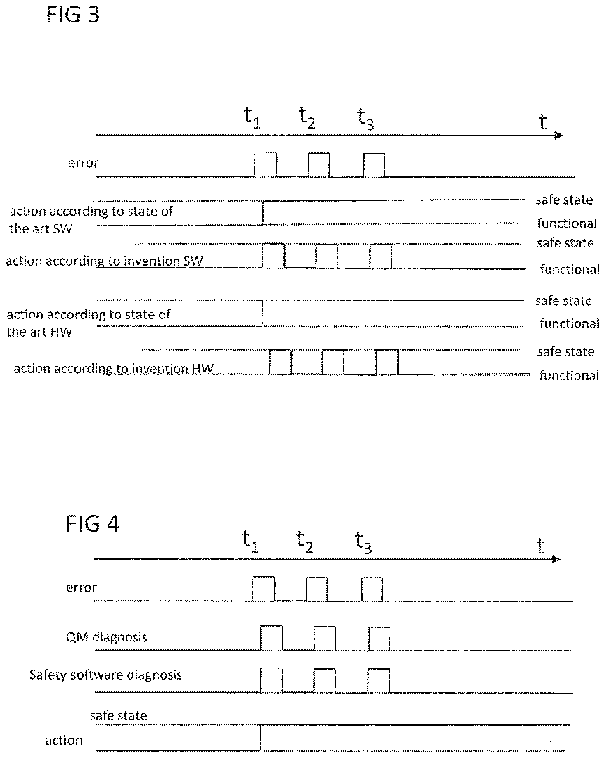

Figure 3 shows a comparison of the reactions of the electronic control system according to the state of the art and according to an embodiment of the invention. According to figure 3, a transient error occurs at times t₁, t₂ and t₃. According to the state of the art, the respective software (SW) component would be set to safe state permanently (with a small delay in time) and not go functional again until e.g. the vehicle is started again.

According to the invention, however, the component is set to safe state only as long as the error persists. If the error does not persist any more, the component is moved out of safe state. Hence, when the error is not detected any more, the system goes functional again, until it is set to safe state again in case of reappearance of the error.

The same applies for hardware (HW) diagnosis, see the two graphs at the bottom of figure 3. According to the state of the art, the respective hardware component would be set to safe state permanently (with a small delay in time). According to the invention, however, the component is set to safe state only as long as the error persists. If the error does not persist any more, the component is moved out of safe state and goes functional again.

Figure 4 illustrates the diagnosing of at least one functional component over time t during one single driving event. If an error occurs with a component, it might be detected by the non-safety software (QM diagnosis) and by the safety software, with a small delay in time. If the safety software confirms the presence of an error, the component is moved into a safe state, because there is a permanent hardware failure.
This case is illustrated in figure 4.

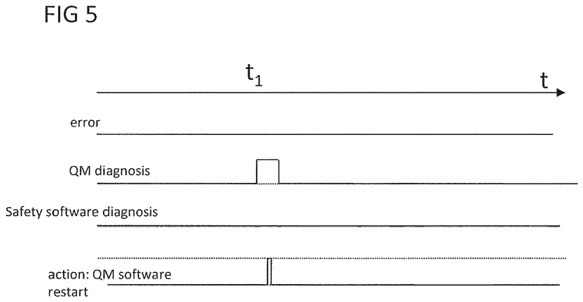

Figure 5, however, illustrates the case where there is no error present in the component, but where the QM software detects an error, which is not confirmed by the safety software. Consequently, the component is not moved into safe state, as there is no error present. Instead, a restart of the QM software is triggered by the safety software e.g. by resetting the microcontroller. The number of restarts possible may be limited.

### List of reference symbols

- 1: vehicle
- 2: battery
- 3: DC/DC
- 4: DC/AC
- 5: electric motor
- 6: transmission
- 10: control system
- 100: step
- 200,200': step
- 300: step
- 400: step
- 500: step
- 600: step

## Claims

1. Method for handling safety-relevant errors in a vehicle, comprising
- diagnosing the functionality of at least one safety-relevant functional component by a non-safety software;
- diagnosing the functionality of the safety-relevant functional component by a safety software;
- setting the functional component to safe state only if and only as long as the safety software detects an error of the safety-relevant functional component.

2. Method according to claim 1,
wherein setting the functional component to safe state includes preventing energy to be transferred to and from the functional component.

3. Method according to claim 1 or 2,
wherein a restart of the non-safety software is triggered by the safety-software, if the safety software is unable to confirm an error of the safety-relevant functional component detected by the non-safety software.

4. Method according to any of claims 1 to 3,
wherein diagnosing the functionality of the at least one safety-relevant functional component includes repeatedly performing diagnostic tests at time intervals by the non-safety software.

5. Electronic control system of a vehicle comprising at least one control unit adapted to perform the method according to claims 1 to 4.
